# EUROPEAN PATENT APPLICATION

(11) **EP 4 040 726 A1**
(43) Date of publication of application: **10.08.2022**
(21) Application number: 20871094.7
(22) Date of filing: 09.06.2020
(51) Int. Cl.: H04L 12/24

(54) **METHOD AND SYSTEM FOR REPORTING FAULT EVENT INFORMATION**

(30) Priority: 30.09.2019 CN 201910944260
(71) Applicant: ZTE Corporation, Shenzhen, Guangdong 518057 (CN)
(72) Inventor: NIU, Xiaobing, Shenzhen, Guangdong 518057 (CN)
(74) Representative: Novagraaf Technologies
(86) International application number: PCT/CN2020/095195
(87) International publication number: WO 2021/063022

(57) **Abstract**

Provided in the embodiments are a method and system for reporting fault event information. The method includes: a Termination and Adaptation Performer (TAP) receives first fault event information reported by a forwarding network element; the TAP converts the first fault event information to second fault event information according to a binding relationship between subnetwork points and forwarding points; the TAP sends the second fault event information to a Resource Notification component (RN); the RN converts the second fault event information to third fault event information and sends the third fault event information to a Link Resources Manager (LRM); and the LRM updates an operating state of at least one subnetwork point according to the third fault event information. According to the embodiments, the technical problem that how to report fault event information in an MCC system is not specified in the related art is solved, and the effect of clarifying the reporting process of the fault event information in the MCC system is achieved.

## Description

### Technical Field

The present disclosure relates to the field of communications, and in particular to a method and system for reporting fault event information.

### Background

Management Control Continuum (MCC) integrates management functions with control functions, for example, a Software Defined Networking (SDN) controller, an Element Management System (EMS), a Network Management System (NMS) and a control plane are all instances of the MCC system. The MCC system is configured to implement unified management and control over transmission resources, and provide a comprehensive management control service for upper-layer users. In the MCC system, functional modules provide functional services via interfaces.

In a traditional network element, a fault generally needs to be reported to a management plane or a network management system after being confirmed. The time required to confirm the occurrence of a fault is 2±0.5 seconds, and the time required to confirm the disappearance of a fault is 10±0.5 seconds. By means of such a time delay confirmation mechanism, fault messages reported to a management plane can be reduced in a case where a fault in the forwarding plane frequently occurs or disappears.

Fault Reporting Management (FRM) is an important function in a forwarding plane network element specified in ITU-T G.7710. The FRM is mainly responsible for registering a fault generated in the network element, and quickly reporting the fault to be reported to a specific MCC system, such as an SDN controller or a control plane, according to a Fault Event Reporting information configuration.

Dynamic scheduling of a connection is a basic function of an MCC system, and in a case where a forwarding resource in a forwarding plane has a fault that affects the connection, the MCC system is required to start recovery of the connection. However, in the related art, how to report fault event information in an MCC system is not specified.

Aiming at the technical problem that how to report fault event information in an MCC system is not specified in the related art, no solution has been proposed.

### Summary

Embodiments of the present disclosure provide a method and system for reporting fault event information, which can at least solve the technical problem that how to report fault event information in an MCC system is not specified in the related art.

According to an embodiment of the present disclosure, a method for reporting fault event information is provided, including the following operations.

A Termination and Adaptation Performer (TAP) receives first fault event information reported by a forwarding network element.

The TAP converts the first fault event information into second fault event information according to a binding relationship between subnetwork points and forwarding points.

The TAP sends the second fault event information to a Resource Notification component (RN).

The RN converts the second fault event information into third fault event information, and sends the third fault event information to a Link Resources Manager (LRM).

The LRM updates an operation state of at least one subnetwork point according to the third fault event information.

According to another embodiment of the present disclosure, a system for reporting fault event information is provided, including a TAP, an RN, and an LRM

The TAP is configured to receive first fault event information reported by a forwarding network element; convert the first fault event information into second fault event information according to a binding relationship between subnetwork points and forwarding points, and send the second fault event information to the RN.

The RN is configured to convert the second fault event information into third fault event information, and send the third fault event information to the LRM

The LRM is configured to update an operation state of at least one subnetwork point according to the third fault event information.

According to the embodiments of the present disclosure, the TAP receives the first fault event information reported by the forwarding network element; the TAP converts the first fault event information into second fault event information according to a binding relationship between subnetwork points and forwarding points; the TAP sends the second fault event information to the RN; the RN converts the second fault event information into third fault event information, and sends the third fault event information to the LRM; the LRM updates the operation state of at least one subnetwork point according to the third fault event information. Therefore, the technical problem that how to report fault event information in an MCC system is not specified in the related art yet can be solved, and the effect of clarifying the reporting process of the fault event information in the MCC system can be achieved.

### Brief Description of the Drawings

The drawings described herein are intended to provide a further understanding of the embodiments of the present disclosure, and form a part of the embodiments of the present disclosure. The exemplary embodiments of the present disclosure and the description thereof are intended to explain the embodiments of the present disclosure, but do not form improper limits to the embodiments of the present disclosure. In the drawings:
Fig. 1 is a structural block diagram of an MCC system according to an embodiment of the present disclosure;
Fig. 2 is a flowchart of a method for reporting fault event information according to an embodiment of the present disclosure;
Fig. 3 is a schematic diagram of a network topology according to an exemplary embodiment of the present disclosure; and
Fig. 4 is a structural block diagram of a system for reporting fault event information according to an embodiment of the present disclosure.

### Detailed Description

Hereinafter, the embodiments of the present disclosure will be described in detail with reference to the accompanying drawings and embodiments. It should be noted that the embodiments in the present disclosure and the features in the embodiments can be combined with each other without conflict.

It should be noted that terms such as "first" and "second" in the description and claims of the embodiments of the present disclosure and the drawings are used to distinguish similar objects, and are not necessarily used to describe a specific sequence or order.

The technical terms and corresponding full English names and abbreviations involved in the embodiments of the present disclosure are as follows:
Automatically Switched Optical Network, abbreviated as ASON;
Link Resources Manager, abbreviated as LRM;
Connection Controller, abbreviated as CC;
Routing Controller, abbreviated as RC;
Termination and Adaptation Performer, abbreviated as TAP;
Resource Notification, abbreviated as RN;
Fault Event Filtering, abbreviated as FEF;
Fault Event Filtering information, abbreviated as FEF information;
Software Defined Networking, abbreviated as SDN;
Subnetwork Point, abbreviated as SNP;
Forwarding Point, abbreviated as FP;
Forwarding End Point, abbreviated as FwEP;

### Embodiment 1

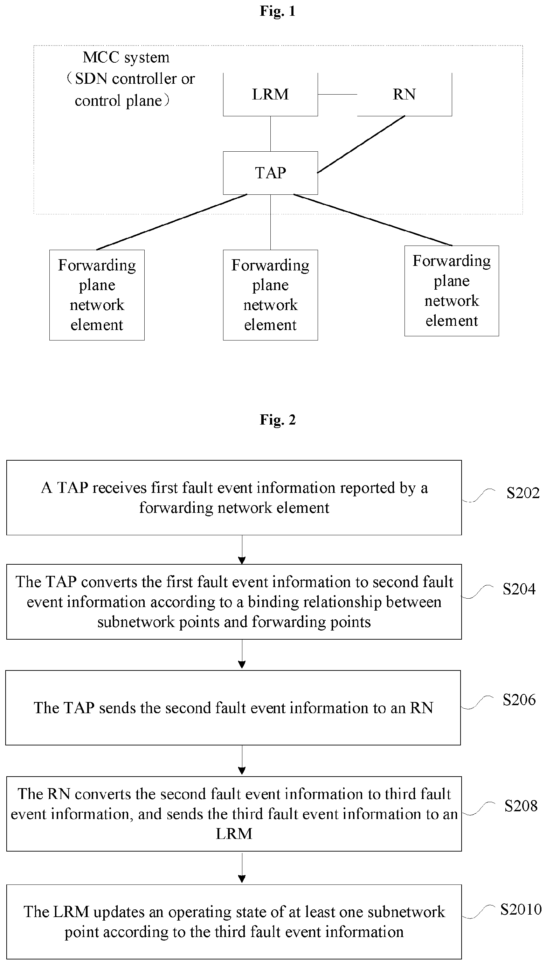

Fig. 1 is a structural block diagram of an MCC system according to an embodiment of the present disclosure. As shown in Fig. 1, the MCC system includes an LRM, a TAP and an RN, and Fig. 1 shows a connection relationship between the MCC system and forwarding plane network elements.

Forwarding resources of the forwarding plane (for example, a timeslot, a bandwidth label, and a port may all be used as forwarding resources of the forwarding plane) need to be converted into resources that can be managed and controlled by the MCC system. The forwarding resources of the forwarding plane may be represented by a forwarding point (FP) or a forwarding end point (FwEP), wherein the forwarding end point is a forwarding point related to a path termination source or a path termination destination. A resource used in the MCC system is represented by a Subnetwork Point (SNP). The relationship between the FP/FwEP (namely, the FP or the FwEP) and the SNP is managed by the TAP. One SNP may be bound to one FP/FwEP, or multiple SNPs may be bound to one FP/FwEP, which means that multiple SNPs share the resources of the FP/FwEP. That is to say, the connections maintained by the MCC system use a series of SNPs from the perspective of the management and control, and use the FP/FwEP resources in the forwarding plane network elements from the perspective of the forwarding plane.

Embodiments of the present disclosure provide a method for reporting fault event information. As an exemplary implementation, the method for reporting fault event information may be implemented on the network architecture shown in Fig. 1. Fig. 2 is a flowchart of a method for reporting fault event information according to an embodiment of the present disclosure. As shown in Fig. 2, the flow includes the following operations:
At S202, a TAP receives first fault event information reported by a forwarding network element.
At S204, the TAP converts the first fault event information into second fault event information according to a binding relationship between subnetwork points and forwarding points.
At S206, the TAP sends the second fault event information to an RN.
At S208, the RN converts the second fault event information into third fault event information, and sends the third fault event information to an LRM
At S2010, the LRM updates an operation state of at least one subnetwork point according to the third fault event information.

Through the above operations, the TAP receives the first fault event information reported by the forwarding network element; the TAP converts the first fault event information into second fault event information according to a binding relationship between subnetwork points and forwarding points; the TAP sends the second fault event information to the RN; the RN converts the second fault event information into third fault event information, and sends the third fault event information to the LRM; the LRM updates the operation state of at least one subnetwork point according to the third fault event information. The method of the embodiments of the present disclosure solves the technical problem that how to report fault event information in an MCC system is not specified in the related art, and achieves the effect of clarifying the reporting process of the fault event information in the MCC system. In addition, the processing capability of the MCC system to the fault of the forwarding plane is enhanced, thereby improving the fault recovery efficiency of the MCC system.

In an exemplary embodiment of the present disclosure, the first fault event information is used to indicate fault information on at least one forwarding point, and the first fault event information includes at least one record, wherein each record at least includes the following information: an identifier, a location and an operation state of a forwarding point, wherein the operation state includes an enabled state or a disabled state.

As an exemplary implementation, one record in the first fault event information may include an identifier, a location and an operation state of a forwarding point, wherein the operation state includes an enabled state or a disabled state. As an exemplary implementation, in a case where the operation state is the enabled state, it represents that the forwarding point is allowed to be used; and in a case where the operation state is the disabled state, it represents that the forwarding point is not allowed to be used.

As an exemplary implementation, the first fault event information is used to indicate fault information on at least one forwarding point, and the first fault event information includes at least one record, wherein each record at least includes the following information: an identifier, a location, a fault reason and a fault state of a forwarding point, wherein the fault state includes fault occurrence or fault disappearance.

As an exemplary implementation, in the foregoing embodiment, one record in the first fault event information may include an identifier, a location, a fault reason and a fault state of a forwarding point.

In an exemplary embodiment of the present disclosure, the second fault event information is used to indicate fault information on at least one subnetwork point, and the second fault event information includes at least one record, wherein each record at least includes the following information: an identifier and an operation state of a subnetwork point, wherein the operation state includes: an enabled state or a disabled state.

As an exemplary implementation, in the foregoing embodiment, one record in the second fault event information may include an identifier and an operation state of a subnetwork point, wherein the operation state includes an enabled state or a disabled state. As an exemplary implementation, in a case where the operation state is the enabled state, it represents that the subnetwork point is allowed to be used; and in a case where the operation state is the disabled state, it represents that the subnetwork point is not allowed to be used.

In the foregoing embodiment, the operation that the TAP converts the first fault event information into the second fault event information according to the binding relationship between the subnetwork points and the forwarding points includes:
the TAP determines, according to the binding relationship between the subnetwork points and the forwarding points, at least one subnetwork point bound to the at least one forwarding point in the first fault event information, wherein the at least one subnetwork point serve as the at least one subnetwork point in the second fault event information; and the TAP determines the operation state in the first fault event information as the operation state in the second fault event information.

In the foregoing embodiment, as an exemplary implementation, the TAP may determine, according to the binding relationship between the forwarding points and the subnetwork points, at least one subnetwork point bound to the at least one forwarding point in the first fault event information, and use the at least one subnetwork point as the at least one subnetwork point in the second fault event information. The TAP takes the operation state of the at least one forwarding point in the first fault event information as the operation state of at least one subnetwork point bound to the at least one forwarding point, and records the identifier of each subnetwork point and the operation state of the subnetwork point in one record in the second fault event information.

As an exemplary implementation, in the foregoing embodiment, the operation that the TAP converts the first fault event information into the second fault event information according to the binding relationship between the subnetwork points and the forwarding points includes:
the TAP determines, according to the binding relationship between the subnetwork points and the forwarding points, at least one subnetwork point bound to the at least one forwarding point in the first fault event information, and records the at least one subnetwork point in the second fault event information; and
the TAP determines the operation state in the second fault event information according to the fault reason and the fault state in the first fault event information.

The TAP may determine the operation state in the second fault event information according to the fault reason and the fault state in the first fault event information. In an exemplary embodiment of the present disclosure, the TAP determines the operation state of at least one subnetwork point bound to the forwarding point according to the fault reason and the fault state of the forwarding point in the first fault event information.

In the foregoing embodiment, the operation that the TAP determines the operation state in the second fault event information according to the fault reason and the fault state in the first fault event information includes:
in a case where the fault state is the fault occurrence, it is determined that the operation state in the second fault event information is the disabled state;
in a case where the fault state is the fault disappearance, it is determined that the operation state in the second fault event information is the enabled state.

It should be noted that, as an exemplary implementation, in a case where the fault state of a forwarding point in the first fault event information is the fault occurrence, the TAP determines that the operation state of at least one subnetwork point bound to the forwarding point is the disabled state; in a case where the fault state of a forwarding point in the first fault event information is the fault disappearance, the TAP determines that the operation state of at least one subnetwork point bound to the forwarding point is the enabled state.

In the foregoing embodiment of the present disclosure, the third fault event information is used to indicate fault information on at least one subnetwork point, and the third fault event information includes at least one record, wherein each record at least includes the following information: an identifier and an operation state of a subnetwork point, wherein the operation state includes: an enabled state or a disabled state.

The operation that the RN converts the second fault event information into the third fault event information includes: the at least one subnetwork point in the second fault event information is used as the at least one subnetwork point in the third fault event information, and the operation state in the second fault event information is used as the operation state in the third fault event information.

In an exemplary implementation, the RN uses the at least one subnetwork point in the second fault event information as the at least one subnetwork point in the third fault event information, and records, in the third fault event information, the operation state of the at least one subnetwork point in the second fault event information.

In addition, before the RN converts the second fault event information into the third fault event information, the foregoing embodiment may further include the following technical solution.

The RN filters the second fault event information according to a fault suppression rule, and determines second fault event information to be reported and second fault event information not to be reported in the second fault event information.

The RN determines at least one subnetwork point in the second fault event information to be reported as at least one subnetwork point in the third fault event information, and determines an operation state in the second fault event information to be reported as an operation state in the third fault event information.

In a case where the MCC system triggers the recovery of the connection based on a confirmed fault, the time taken for recovering from the fault is prolonged, and the quality of the service carried by the connection is affected. In order to accelerate the recovery of a connection based on an MCC system, in an exemplary embodiment of the present disclosure, a specific fault type can be screened out by filtering the fault event information, and a fault message belonging to the specific fault type is directly and quickly reported without fault confirmation, thereby accelerating the reporting flow of the fault message in the MCC system, and saving the time spent by the MCC system in recovering a connection.

It should be noted that, in the foregoing embodiment of the present disclosure, the RN filters the second fault event information according to the fault suppression rule, and after determining, in the second fault event information, the second fault event information to be reported and the second fault event information not to be reported, the RN only converts the second fault event information to be reported into the third fault event information.

In the foregoing embodiment, the operation that the LRM updates the operation state of the at least one subnetwork point according to the third fault event information includes:
the LRM updates the operation state of the at least one subnetwork point managed by the LRM according to an operation state of at least one subnetwork point in the third fault event information.

In addition, the foregoing embodiment may further include the following technical solution.

The LRM notifies a CC that a link resource state corresponding to the at least one subnetwork point has changed; and the CC determines whether to start recovering or restoring a connection.

The LRM notifies an RC that a link and topology state corresponding to the at least one subnetwork point have changed; and the RC determines whether to update a topology.

As an exemplary implementation, in a case where the operating state of a subnetwork point changes, the LRM may inform the CC that a link resource state corresponding to the subnetwork point changes, and the CC judges whether to start recovering or restoring a connection, for example, but not limited to, judging whether to recover the connection or reuse the connection.

As an exemplary implementation, in the foregoing embodiment, the forwarding point includes a forwarding end point.

The foregoing method for reporting fault event information is explained below with reference to an example, but the example is not intended to limit the technical solutions of the embodiments of the present disclosure. The technical solutions of an exemplary implementation of the embodiments of the present disclosure are as follows.

At operation 1, a TAP module receives first fault event information reported by a forwarding network element.

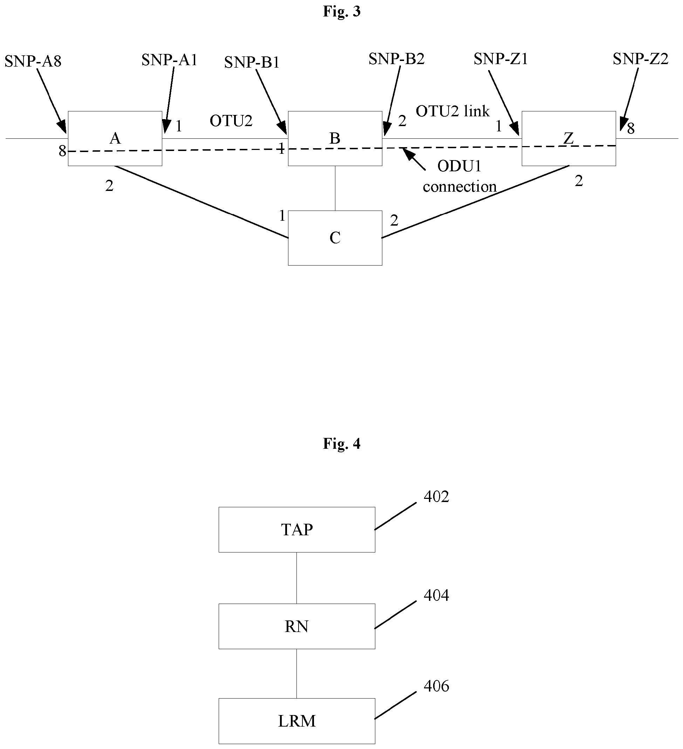

Fig. 3 is a schematic diagram of a network topology according to an exemplary embodiment of the present disclosure. As shown in Fig. 3, in the network topology, four network elements A, B, C, and Z are interconnected via OTU2 links. On this network, an ODU1 connection between an 8#port of an A point (namely, the network element A) and an 8#port of a Z point (namely, the network element Z) can be established through an MCC system, such as an SDN controller or a control plane. After the connection is established, a binding relationship between a forwarding point and a resource used in the MCC system can be established in the SDN controller. In the embodiments of the present disclosure, a binding relationship between a forwarding point and a resource used in the MCC system is pre-established. The following description takes pre-establishing a binding relationship between an FP and an SNP as an example. The above-mentioned binding relationship between a forwarding point used for the ODU1 connection and a resource used in the MCC system, that is, the binding relationship between an FP and an SNP, is as shown in table 1.

**Table 1**

| SNP identifier | Bound FP resource |
|---|---|
| SNP-A8 | 1#ODU1 of 8#OTU2 port of network element A |
| SNP-A1 | 1#ODU 1 of 1#OTU2 port of network element A |
| SNP-B 1 | 1#ODU 1 of 1#OTU2 port of network element B |
| SNP-B2 | 1#ODU 1 of 2#OTU2 port of network element B |
| SNP-Z 1 | 1#ODU 1 of 1#OTU2 port of network element Z |
| SNP-Z8 | 1#ODU1 of 8#OTU2 port of network element Z |

In order to accelerate the fault recovery of the ODU1 connection, in the embodiments of the present disclosure, the MCC system (such as an SDN controller or a control plane) may configure a specific SNP which is allowed to report a fault or which is not allowed to report a fault. For example, a fault fast reporting enabling state of all the SNPs used by the connection are set to be an enabled state, i.e., the fault of the forwarding points used by the connection is allowed to be reported to the MCC system quickly. For example, the fault fast reporting enabling state is not set for other unused SNPs, that is, the fault fast reporting enabling state is a disabled state.

In the above embodiment, after detecting the fault (such as link interruption fault, ODUk channel fault, etc.), the forwarding plane network element reports fault information (namely, the first fault event information in the above embodiment) to the TAP module of the MCC system.

For example, the interruption of a link between the network element B and the network element Z may cause a link layer fault and an ODUk channel fault. In the embodiments of the present disclosure, the fault ODU-AIS (ODU Alarm Indication Signal) of the subnetwork point whose SN identifier is SNP-Z1 can be reported to the MCC system.

As an exemplary implementation, in a case where each record in the first fault event information at least includes an identifier, a location and an operation state of a forwarding point/forwarding end point, since the forwarding point bound to the subnetwork point whose SN identifier is SNP-Z1 is 1#ODU1 of 1#OTU2 port of the network element Z (namely, 1# ODU1 of OTU2 under 1# port of the network element Z, in which the identifier and the location of the forwarding point are reflected), the content of the first fault event information is 1#ODU1 of 1#OTU2 port of the network element Z (namely, the identifier and the location of the forwarding point), and disabled (namely, the operation state of the forwarding point).

As an exemplary implementation, in a case where each record in the first fault event information at least includes: an identifier, a location, a fault reason and a fault state of a forwarding point/forwarding end point, wherein the fault state includes: fault occurrence or fault disappearance, since the forwarding point bound to the subnetwork point whose SN identifier is SNP-Z1 is 1#ODU1 of 1#OTU2 port of the network element Z, the content of the first fault event information is 1#ODU1 of 1#OTU2 port of the network element Z, ODU-AIS (namely, a fault reason), and the fault state is fault occurrence (namely, fault occurrence in the described embodiments).

At operation 2, the TAP module converts the first fault event information into second fault event information according to a binding relationship between subnetwork points and forwarding points/forwarding end points.

In the binding relationship between the forwarding points/forwarding end points and the subnetwork points, there may be only one SNP bound to one forwarding point, and there may also be multiple SNPs bound to one forwarding point, that is, these SNPs share the forwarding point resource. At least one subnetwork point bound to the forwarding point/forwarding end point in the first fault event information is obtained and updated to the second fault event information.

At operation 3, the TAP module sends the second fault event information to an RN module.

At operation 4, the RN module converts the second fault event information into third fault event information and sends the third fault event information to an LRM module.

At operation 5, the LRM module updates an operation state of at least one subnetwork point according to the third fault event information.

As an exemplary implementation, the first fault event information is used to indicate fault information on at least one forwarding point/forwarding end point, and may contain at least one record. Each record at least includes an identifier, a location and an operation state of a forwarding point/forwarding end point, wherein the operation state includes an enabled state or a disabled state.

As another exemplary implementation, the first fault event information is used to indicate fault information on at least one forwarding point/forwarding end point, and may include at least one record. Each record at least includes an identifier, a location, a fault reason and a fault state of a forwarding point/forwarding end point, wherein the fault state includes fault occurrence or fault disappearance.

In the foregoing embodiment of the present disclosure, the second fault event information is used to indicate fault information on at least one subnetwork point, and may include at least one record. Each record at least includes an identifier and an operation state of a subnetwork point, wherein the operation state includes an enabled state or a disabled state.

It should be noted that, in the foregoing embodiment of the present disclosure, the TAP module obtains at least one subnetwork point bound to at least one forwarding point/forwarding end point in the first fault event information according to a binding relationship between the forwarding points/forwarding end points and the subnetwork points, and updates the at least one subnetwork point to the second fault event information (for example, but not limited to, recording the at least one subnetwork point into at least one record in the second fault event information).

The operation state in the second fault event information may be determined or updated according to the following operations.

The operation state in the first fault event information is equivalently converted into the operation state in the second fault event information; or ,

The fault reason and the fault state in the first fault event information are converted into the operation state in the second fault event information, for example, but not limited to, in a case where the fault state is fault occurrence (namely, fault occurrence in the described embodiments), the operation state is the disabled state; and in a case where the fault state is fault disappearance (namely, the fault message in the foregoing embodiment), the operation state is the enabled state.

As an exemplary implementation, the third fault event information is used to indicate fault information on at least one subnetwork point, and may include at least one record. Each record at least includes an identifier and an operation state of a subnetwork point, wherein the operation state includes an enabled state or a disabled state.

As an exemplary implementation, the RN module equivalently switches the subnetwork point in the second fault event information to the subnetwork point in the third fault event information (namely, the RN module determines the subnetwork point in the second fault event information as the subnetwork point in the third fault event information), and correspondingly, equivalently switches the operation state in the second fault event information to the operation state in the third fault event information.

In addition, the embodiments of the present disclosure may also execute the following technical solutions. The RN module filters out, according to a fault suppression rule, second fault event information not to be reported, and equivalently converts the subnetwork point in the second fault event information that is not filtered out in the second fault event information into the subnetwork point in the third fault event information, and correspondingly, equivalently converts the operation state in the second fault event information that is not filtered out in the second fault event information into the operation state in the third fault event information.

In addition, as an exemplary implementation, the LRM module notifies the CC module (namely, the connection controller in the described embodiments) that a link resource state corresponding to the subnetwork point changes, and the CC module may judge whether to start recovering or restoring the connection. In addition, the LRM module notifies the RC module (namely, the routing controller in the above embodiments) that a link and topology state corresponding to the subnetwork point have changed, and the RC module may determine whether to start topology update.

Through the description of the foregoing embodiments, a person having ordinary skill in the related art may clearly understand that the method according to the foregoing embodiments may be implemented by software in addition to a necessary universal hardware platform, and definitely may also be implemented by hardware. However, in many cases, the former is a preferred implementation. Based on such understanding, the essence of the technical solutions of the embodiments of the present disclosure or the part contributing to the prior art may be embodied in the form of a software product. The computer software product may be stored in a storage medium (such as a ROM/RAM, a magnetic disk, or an optical disk), and includes several instructions for instructing a terminal device (which may be a mobile phone, a computer, a server, or a network device) to execute the methods described in the embodiments of the present disclosure.

### Embodiment 2

The present embodiment provides a system for reporting fault event information. The system is used for implementing the described embodiments and exemplary implementations, and what has been described will not be elaborated. The term "module", as used hereinafter, is a combination of software and/or hardware capable of realizing a predetermined function. Although the apparatus described in the following embodiment is preferably implemented by software, implementation of hardware or a combination of software and hardware is also possible and conceivable.

Fig. 4 is a structural block diagram of a system for reporting fault event information according to an embodiment of the present disclosure. As shown in Fig. 4, the system includes:
a TAP 402, an RN 404, and an LRM 406.

The TAP 402 is configured to receive first fault event information reported by a forwarding network element; convert the first fault event information into second fault event information according to a binding relationship between subnetwork points and forwarding points; and send the second fault event information to the RN 404.

The RN 404 is configured to convert the second fault event information into third fault event information, and send the third fault event information to the LRM 406.

The LRM 406 is configured to update an operation state of at least one subnetwork point according to the third fault event information.

Through the above embodiments, the TAP receives the first fault event information reported by the forwarding network element; the TAP converts the first fault event information into second fault event information according to a binding relationship between subnetwork points and forwarding points; the TAP sends the second fault event information to the RN; the RN converts the second fault event information into third fault event information, and sends the third fault event information to the LRM; the LRM updates the operation state of at least one subnetwork point according to the third fault event information. The present disclosure solves the technical problem that how to report fault event information in an MCC system is not specified in the related art, and achieves the effect of clarifying the reporting process of the fault event information in the MCC system.

In an exemplary embodiment of the present disclosure, the first fault event information is used to indicate fault information of at least one forwarding point, and the first fault event information includes at least one record, wherein each record at least includes the following information: an identifier, a location and an operation state of a forwarding point, wherein the operation state includes an enabled state or a disabled state.

As an exemplary implementation, the first fault event information is used to indicate fault information on at least one forwarding point, and the first fault event information includes at least one record, wherein each record at least includes the following information: an identifier, a location, a fault reason and a fault state of a forwarding point, wherein the fault state includes fault occurrence or fault disappearance.

It should be noted that each module may be implemented by software or hardware. The latter may be implemented in the following manner, but is not limited thereto. All the modules are located in a same processor; alternatively, the modules are located in different processors in an arbitrary combination.

Alternatively, for specific examples in this embodiment, reference may be made to the examples described in the foregoing embodiments and exemplary implementations, and details are not repeatedly described herein in this embodiment.

Obviously, those having ordinary skill in the related art should understand that each module or each operation of the described embodiments of the present disclosure can be implemented by a universal computing device, and can be concentrated on a single computing device or distributed on a network composed of multiple computing devices. As an exemplary implementation, the modules or operations can be implemented by program codes executable for the computing devices, so that the modules or operations can be stored in a storage device for execution by the computing devices. The shown or described operations can be executed in sequences different from those described here in some cases, or the modules or operations can be made into integrated circuit modules respectively, or multiple modules or operations therein can be made into a single integrated circuit module for implementation. As such, the embodiments of the present disclosure are not limited to any particular hardware and software combination.

The above descriptions are only exemplary embodiments of the present disclosure, and are not intended to limit the embodiments of the present disclosure. For those having ordinary skill in the related art, the embodiments of the present disclosure may have various modifications and variations. Any modifications, equivalent replacements, improvements and the like made within the principle of the embodiments of the present disclosure shall belong to the scope of protection of the embodiments of the present disclosure.

### Industrial applicability

According to the embodiments of the present disclosure, the TAP receives the first fault event information reported by the forwarding network element; the TAP converts the first fault event information into second fault event information according to a binding relationship between subnetwork points and forwarding points; the TAP sends the second fault event information to the RN; the RN converts the second fault event information into third fault event information, and sends the third fault event information to the LRM; the LRM updates the operation state of at least one subnetwork point according to the third fault event information. Therefore, the technical problem that how to report fault event information in an MCC system is not specified in the related art yet can be solved, and the effect of clarifying the reporting process of the fault event information in the MCC system can be achieved.

## Claims

1. A method for reporting fault event information, comprising:
receiving, by a Termination and Adaptation Performer, TAP, first fault event information reported by a forwarding network element;
converting, by the TAP, the first fault event information into second fault event information according to a binding relationship between subnetwork points and forwarding points;
sending, by the TAP, the second fault event information to a Resource Notification component, RN;
converting, by the RN, the second fault event information into third fault event information, and sending, by the RN, the third fault event information to a Link Resources Manager, LRM; and
updating, by the LRM, an operation state of at least one subnetwork point according to the third fault event information.

2. The method according to claim 1, wherein the first fault event information is used to indicate fault information on at least one forwarding point, and the first fault event information comprises at least one record, wherein each record at least comprises the following information: an identifier, a location and an operation state of a forwarding point, wherein the operation state comprises an enabled state or a disabled state.

3. The method according to claim 1, wherein the first fault event information is used to indicate fault information on at least one forwarding point, and the first fault event information comprises at least one record, wherein each record at least comprises the following information: an identifier, a location, a fault reason and a fault state of a forwarding point, wherein the fault state comprises fault occurrence or fault disappearance.

4. The method according to claim 2, wherein the second fault event information is used to indicate fault information on at least one subnetwork point, and the second fault event information comprises at least one record, wherein each record at least comprises the following information: an identifier and an operation state of a subnetwork point, wherein the operation state comprises: an enabled state or a disabled state.

5. The method according to claim 4, wherein the converting, by the TAP, the first fault event information into the second fault event information according to the binding relationship between the subnetwork points and the forwarding points comprises:
determining, by the TAP according to the binding relationship between the subnetwork points and the forwarding points, at least one subnetwork point bound to the at least one forwarding point in the first fault event information, wherein the at least one subnetwork point serve as the at least one subnetwork point in the second fault event information; and
determining, by the TAP, the operation state in the first fault event information as the operation state in the second fault event information.

6. The method according to claim 3, wherein the second fault event information is used to indicate fault information on at least one subnetwork point, and the second fault event information comprises at least one record, wherein each record at least comprises the following information: an identifier and an operation state of a subnetwork point, wherein the operation state comprises: an enabled state or a disabled state.

7. The method according to claim 6, wherein the converting, by the TAP, the first fault event information into the second fault event information according to the binding relationship between the subnetwork points and the forwarding points comprises:
determining, by the TAP according to the binding relationship between the subnetwork points and the forwarding points, at least one subnetwork point bound to the at least one forwarding point in the first fault event information, and recording, by the TAP, the at least one subnetwork point in the second fault event information; and
determining, by the TAP, the operation state in the second fault event information according to the fault reason and the fault state in the first fault event information.

8. The method according to claim 7, wherein the determining, by the TAP, the operation state in the second fault event information according to the fault reason and the fault state in the first fault event information comprises:
in a case where the fault state is the fault occurrence, determining that the operation state in the second fault event information is the disabled state;
in a case where the fault state is the fault disappearance, determining that the operation state in the second fault event information is the enabled state.

9. The method according to claim 1, wherein the third fault event information is used to indicate fault information on at least one subnetwork point, and the third fault event information comprises at least one record, wherein each record at least comprises the following information: an identifier and an operation state of a subnetwork point, wherein the operation state comprises: an enabled state or a disabled state;
the converting, by the RN, the second fault event information into the third fault event information comprises:
using the at least one subnetwork point in the second fault event information as the at least one subnetwork point in the third fault event information, and using the operation state in the second fault event information as the operation state in the third fault event information.

10. The method according to claim 1, wherein before converting, by the RN, the second fault event information into the third fault event information, the method further comprises:
filtering, by the RN, the second fault event information according to a fault suppression rule, and determining, by the RN, second fault event information to be reported and second fault event information not to be reported in the second fault event information; and
determining, by the RN, at least one subnetwork point in the second fault event information to be reported as at least one subnetwork point in the third fault event information, and determining, by the RN, an operation state in the second fault event information to be reported as an operation state in the third fault event information.

11. The method according to claim 1, wherein the updating, by the LRM, the operation state of the at least one subnetwork point according to the third fault event information comprises:
updating, by the LRM, the operation state of at least one subnetwork point managed by the LRM according to an operation state of at least one subnetwork point in the third fault event information.

12. The method according to claim 1, wherein the method further comprises:
notifying, by the LRM, a connection controller that a link resource state corresponding to the at least one subnetwork point has changed; and
determining, by the connection controller, whether to start recovering or restoring a connection.

13. The method according to claim 1, wherein the method further comprises:
notifying, by the LRM, a routing controller that a link and topology state corresponding to the at least one subnetwork point has changed; and
determining, by the routing controller, whether to update a topology.

14. The method according to any one of claims 1 to 13, wherein the forwarding point comprises a forwarding end point.

15. A system for reporting fault event information, comprising: a Termination and Adaptation Performer, TAP, a Resource Notification component, RN, and a Link Resources Manager, LRM, wherein
the TAP is configured to receive first fault event information reported by a forwarding network element, convert the first fault event information into second fault event information according to a binding relationship between subnetwork points and forwarding points, and send the second fault event information to the RN;
the RN is configured to convert the second fault event information into third fault event information, and send the third fault event information to the LRM; and
the LRM is configured to update an operation state of at least one subnetwork point according to the third fault event information.

16. The system according to claim 15, wherein the first fault event information is used to indicate fault information on at least one forwarding point, and the first fault event information comprises at least one record, wherein each record at least comprises the following information: an identifier, a location and an operation state of a forwarding point, wherein the operation state comprises an enabled state or a disabled state.

17. The system according to claim 15, wherein the first fault event information is used to indicate fault information on at least one forwarding point, and the first fault event information comprises at least one record, wherein each record at least comprises the following information: an identifier, a location, a fault reason and a fault state of a forwarding point, and the fault state comprises fault occurrence or fault disappearance.
